# EUROPEAN PATENT APPLICATION

(11) **EP 4 845 093 A1**
(43) Date of publication of application: **25.11.2026**
(21) Application number: 25227553.2
(22) Date of filing: 30.12.2025
(51) Int. Cl.: H04L 9/32, H04W 12/069, H04W 12/72, H04W 84/04

(54) **ELECTRONIC DEVICE AND METHOD FOR PERFORMING PUF-BASED WIRELESS AUTHENTICATION AND KEY AGREEMENT**

(30) Priority: 21.05.2025 KR 20250066125
(71) Applicant: ICTK Co., Ltd., Seoul 06241 (KR)
(72) Inventor: Kang, Bong Ho, 08735 Seoul (KR); Shim, Hyoung Sub, 05837 Seoul (KR); Yook, Ji Wan, 03324 Seoul (KR); Kim, Bo Na, 16534 Suwon-si (KR)
(74) Representative: Fuchs Patentanwälte Partnerschaft mbB

(57) **Abstract**

Provided are an electronic device and method for performing user authentication. The method performed by the electronic device includes transmitting identification information to a server, receiving authentication data from the server, generating response information on the basis of the received authentication data, generating a signature for the generated response information using security key information, transmitting the signature to the server, and determining whether to initiate a communication session depending on an authentication result received from the server.

## Description

### CROSS-REFERENCE TO RELATED APPLICATION

This application claims priority to and the benefit of Korean Patent Application No. 10-2025-0066125, filed on May 21, 2025, the disclosure of which is incorporated herein by reference in its entirety.

### BACKGROUND

### 1. Field of the Invention

Exemplary embodiments relate to an authentication method and an electronic device.

### 2. Discussion of Related Art

In a mobile communication system, authentication information of a user is generally stored in a subscriber identification module such as a subscriber identity module (SIM), a universal subscriber identity module (USIM), an embedded subscriber identity module (eSIM), or the like. These subscriber identification modules perform various core functions, including accessing a mobile communication network, authenticating a user, providing billing information, controlling access to a service, etc., and are widely utilized in security-sensitive procedures such as financial transactions, account protection, 2-factor authentication, and the like.

Lately, however, there have been a number of reports of subscriber credentials being compromised due to various hacking methods targeting servers or terminals. For example, a mobile communication provider's server that stores subscriber information may be hacked, resulting in leakage of subscribers' SIM information stored on the server. The leaked information may be inserted into a blank public SIM (blank USIM) and tampered with as a duplicate SIM (clone SIM). Attackers may use such clone SIMs to access networks as if they were legitimate users, intercept 2-step authentication (via a short message service (SMS) or voice call) for financial services or online platforms, and maliciously use the information to take over accounts.

A home subscriber server (HSS) in a Long Term Evolution (LTE) environment and a unified data management (UDM) server in a 5^{th} Generation (5G) environment store and manage subscriber information. When these servers are hacked, sensitive authentication information, such as international mobile subscriber identities (IMSIs), mobile station international subscriber directory numbers (MSISDNs), integrated circuit card identifications (ICCIDs), subscriber keys (Ki), etc., may leak outside. Also, there is an indirect attack scenario in which malware is installed on a device to extract internal information of a SIM and the information is transmitted to a hacker's server to create a clone SIM.

When a terminal transmits subscriber identification information (an IMSI or a subscription concealed identifier (SUCI)) to an authentication server (an HSS or UDM server) of a base station, the IMSI is the same, but an international mobile equipment identity (IMEI) of the terminal may be different. Here, a network recognizes this as a "device change." Even in this case, the same subscriber key (Ki) is used to perform an authentication procedure, and thus a new terminal equipped with a clone USIM may also be considered a legitimate user. Using this structural weak point, an attacker may insert a cloned USIM into another terminal to make the terminal appear to be a legitimate user in a network, and then receive a secondary verification code via an SMS or automatic response system (ARS) to gain access to various financial accounts or sensitive information.

In particular, when account access information, such as a victim's identity (ID), password, etc., is also obtained, the hacker can use a combination of the clone SIM and a means of 2-step authentication to completely bypass a user authentication process and freely perform authentication and transactions with banks, cryptocurrency exchanges, cloud accounts, and the like.

Like this, a SIM-based authentication structure is based on a fixed key that is externally injected, and thus has a structural limitation in that, when authentication information leaks, the authentication information can be replicated. Also, the one-to-one correspondence between identification of a user terminal and a SIM is not sufficiently secure.

Against this background, a structure that can fundamentally block the possibility of intercepting, forging, or tampering with authentication information through server hacking, terminal malware, SIM cloning, device change, etc., is required.

### SUMMARY OF THE INVENTION

An embodiment of the present invention is directed to providing an authentication method and electronic device that improve resistance to clone subscriber identity module (SIM) creation and authentication bypass attacks caused by leakage of authentication information from a server or terminal and ensure the security integrity of an authentication procedure by transmitting subscriber identification information (an international mobile subscriber identity (IMSI) or a subscription concealed identifier (SUCI)) to a server, generating a signature for response information (RES) using a subscriber key (Ki) in a subscriber identification module and an asymmetric key-based private key on the basis of a challenge (RAND) and an authentication token (AUTN) received from the server, and then transmitting the signature to the server to perform signature verification and response information comparison.

An embodiment of the present invention is also directed to providing an authentication method and electronic device for strengthening the unique identification of a terminal and the reliability of an authentication path by providing a key-based authentication structure that is configured to generate a unique private key on the basis of a physically unclonable function (PUF) and pass a server-side public key verification procedure using a signature that is generated on the basis of the unique private key and thus is fundamentally impossible to duplicate or reuse.

An embodiment of the present invention is also directed to providing an authentication method and electronic device that realize an enhanced defense structure against cyber threats, such as malicious code insertion, key extraction, replay attacks, etc., and facilitate maintaining the confidentiality and integrity of authentication information by configuring an authentication key to be externally unexposed with all response information generation and signature processing performed within a closed secure environment in a terminal.

An embodiment of the present invention is also directed to providing an authentication method and electronic device that prevent a short message service (SMS) or a secondary means of voice-based authentication from being intercepted by attackecker by performing a PUF-based authentication process in parallel even when a server detects a difference in a terminal identifier (international mobile equipment identity (IMEI)) due to a device change such that authentication is denied even when a cloned universal subscriber identity module (USIM) is used on another terminal.

Objects to be achieved in exemplary embodiments are not limited thereto, and other objects or effects that may be found in the following description will also be included.

According to an aspect of the present invention, there is provided a method of performing user authentication by an electronic device, the method including transmitting identification information to a server, receiving authentication data from the server, generating response information on the basis of the received authentication data, generating a signature for the generated response information using security key information, transmitting the signature to the server, and determining whether to initiate a communication session depending on an authentication result received from the server.

The authentication result may be a verification result obtained by verifying the signature using a public key and comparing expected response information with the signature that is verified.

The method may further include, before the transmitting of the identification information to the server, transmitting the public key to the server.

The transmitting of the identification information to the server may include transmitting the public key to the server together with the identification information.

The server may receive the public key from a certificate authority (CA).

The expected response information may correspond to the response information.

The server may generate an authentication vector including a challenge, the response information, and the expected response information.

The security key information may be a private key generated by applying a digital value generated on the basis of a physically unclonable function (PUF) to an asymmetric encryption scheme.

The authentication data may include a challenge (RAND) and an authentication token (AUTN), the response information may be generated using a subscriber key (Ki) stored in a subscriber identification module and the challenge, and the subscriber key (Ki) stored in the subscriber identification module may be stored in advance before the identification information is transmitted to the server.

The signature may be generated by signing a hash value of the response information with the private key.

According to another aspect of the present invention, there is provided an electronic device for performing user authentication in a mobile communication network, the electronic device including a security module, a communication module, a memory, and a processor operatively connected to at least one of the communication module and the memory. The processor transmits identification information to a server, receives authentication data from the memory and the server, generates response information on the basis of the received authentication data, generates a signature for the generated response information using security key information generated by the security module, transmits the signature to the server, and determines whether to initiate a communication session depending on an authentication result received from the server.

The authentication result may be a verification result obtain by verifying the signature using a public key and comparing expected response information with the signature that is verified.

Before transmitting the identification information to the server, the processor may transmit the public key to the server.

While the identification information is transmitted to the server, the public key may be transmitted to the server together with the identification information.

The server may receive the public key from a CA.

The expected response information may correspond to the response information.

The server may generate an authentication vector including a challenge, the response information, and the expected response information.

The security key information may be a private key generated by applying a digital value generated on the basis of a PUF to an asymmetric encryption scheme.

The authentication data may include a challenge (RAND) and an authentication token (AUTN), the response information may be generated using a subscriber key (Ki) stored in a subscriber identification module and the challenge, and the subscriber key (Ki) stored in the subscriber identification module may be stored in advance before the identification information is transmitted to the server.

The signature may be generated by signing a hash value of the response information with the private key.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a block diagram illustrating an electronic device according to an exemplary embodiment;
FIG. 2 is a diagram of a security module according to an exemplary embodiment;
FIG. 3 is a flowchart of an authentication method according to an exemplary embodiment;
FIG. 4 is a sequence diagram of a first example of the authentication method according to the exemplary embodiment;
FIG. 5 is a sequence diagram of a second example of the authentication method according to the exemplary embodiment; and
FIG. 6 is a sequence diagram of a third example of the authentication method according to the exemplary embodiment.

### DETAILED DESCRIPTION OF EXEMPLARY EMBODIMENTS

Since the present invention is subject to various modifications and may have a variety of embodiments, particular embodiments are illustrated in the drawings and described. However, this is not intended to limit the present invention to particular embodiments, and the present invention is to be understood to include all modifications, equivalents, or substitutions that fall within the spirit and technical scope of the present invention.

Terms including ordinal numbers, such as "first," "second," etc., may be used to describe various components, but the components are not limited by the terms. The terms are only used to distinguish one component from others. For example, without departing from the scope of the present invention, a second component may be named a first component, and similarly, a first component may be named a second component. The term "and/or" includes a combination of a plurality of associated listed items or any of the plurality of associated listed items.

When a component is referred to as being "connected" or "coupled" to another component, the two components may be directly connected or coupled or may be indirectly connected or coupled with an intermediate component therebetween. On the other hand, when a component is referred to as being "directly connected" or "directly coupled" to another component, there is no intermediate component.

Terminology used herein is intended to describe particular embodiments only and is not intended to limit the present invention. Singular expressions include plural expressions unless context clearly indicates otherwise. As used herein, terms such as "include," "have," etc., are intended to designate the presence of features, numbers, steps, operations, components, parts, or combinations thereof described herein, and are not intended to preclude the presence or addition of one or more other features, numbers, steps, operations, components, parts, or combinations thereof.

Unless otherwise defined, all terms used herein, including technical or scientific terms, have the same meaning as commonly understood by those of ordinary skill in the technical field to which the present invention pertains. Terms such as those defined in commonly used dictionaries should be construed as having meanings consistent with their meanings in the context of the relevant art and should not be construed as having an idealized or unduly formal meanings unless expressly defined herein.

In addition, some embodiments may be represented as functional block elements and various processing steps. Some or all of these functional blocks may be realized by various numbers of hardware and/or software components that perform specific functions. For example, functional blocks of the present disclosure may be implemented by one or more processors or microprocessors or circuit elements for performing an intended function. Also, for example, functional blocks of the present disclosure may be implemented using various programming or scripting languages. Functional blocks may be implemented using an algorithm executed by one or more processors. In addition, the present disclosure may employ the related art for electronic environment setting, signal processing, data processing, and/or the like. The terms "module," "element," etc., may be used in a broad sense and are not limited to mechanical and physical elements.

Hereinafter, exemplary embodiments will be described in detail with reference to the accompanying drawings. Throughout the drawings, like reference numerals refer to like components, and description thereof will not be reiterated.

An authentication method according to an exemplary embodiment of the present invention may be implemented by at least one computing device. An authentication method according to an exemplary embodiment of the present invention may be performed by at least one electronic device or an electronic device 100. Here, a computer program according to an exemplary embodiment may be installed and executed on the computing device, and the computing device may perform an authentication method according to exemplary embodiments of the present invention under the control of the executed computer program. The computer program may be stored in a computer-readable recording medium to cause a computer to perform the authentication method in combination with the computing device.

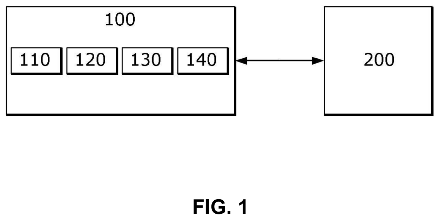

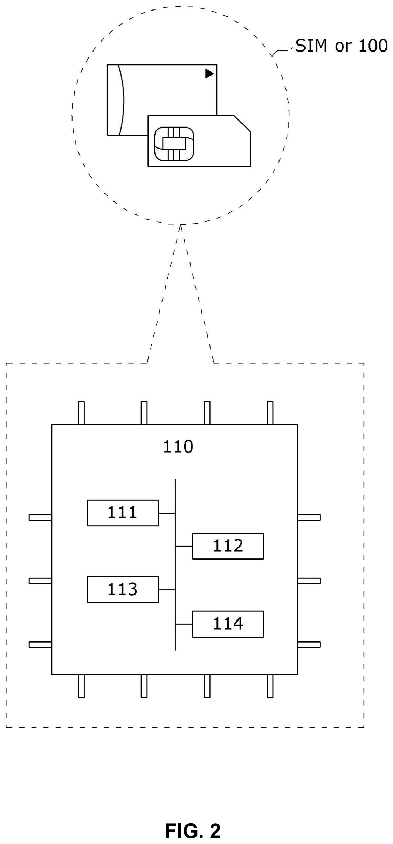

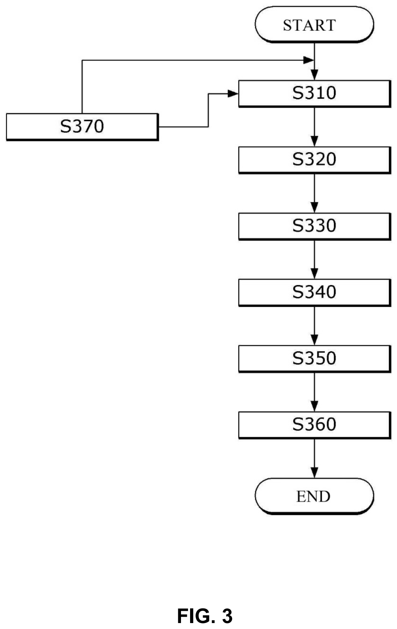

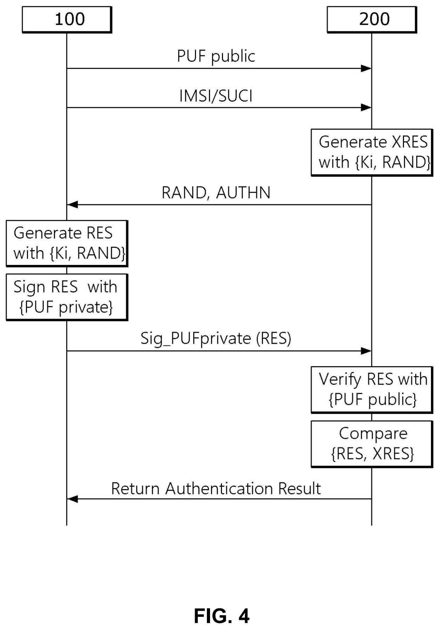

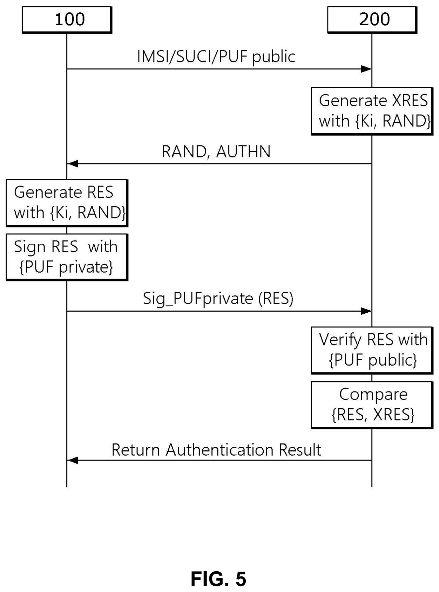

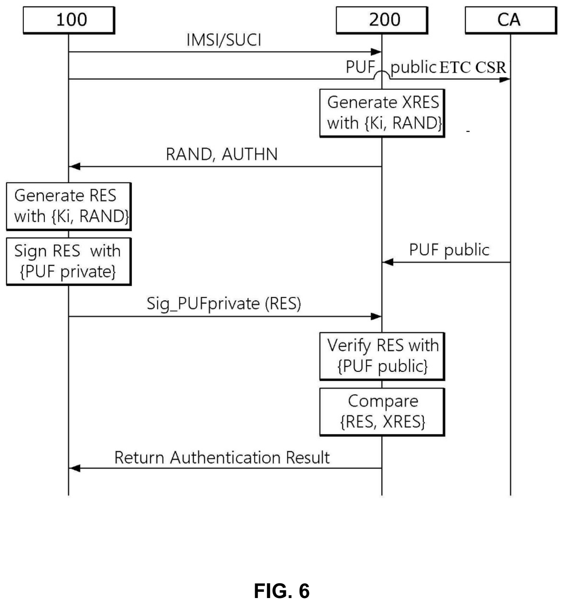

FIG. 1 is a block diagram illustrating an electronic device according to an exemplary embodiment, FIG. 2 is a diagram of a security module according to an exemplary embodiment, FIG. 3 is a flowchart of an authentication method according to an exemplary embodiment, FIG. 4 is a sequence diagram of a first example of the authentication method according to the exemplary embodiment, FIG. 5 is a sequence diagram of a second example of the authentication method according to the exemplary embodiment, and FIG. 6 is a sequence diagram of a third example of the authentication method according to the exemplary embodiment.

Referring to FIGS. 1 and 2, an electronic device 100 according to an exemplary embodiment may include a security module 110, a processor 120, a storage 130, and a communicator 140. The electronic device 100 may generate a key for security and establish a security channel for communication with another device (e.g., a server) on the basis of the generated key. Due to this configuration, it is possible to ensure the confidentiality and integrity of authentication information and provide resistance to wiretapping, forging, tampering, and replay attacks by a third party.

For example, the electronic device 100 may include various electronic devices, such as a smartphone, a tablet, a laptop, a personal computer (PC), etc., various wearable devices, such as a smart watch, smart glasses, etc., various household appliances, such as a smart speaker, a smart television (TV), a smart refrigerator, etc., a smart identification, a smart credit card, a data storage device, a smart vehicle, an Internet of things (IoT) device, and the like. For example, the electronic device 100 may be user equipment, which is connected to a mobile communication network.

The security module 110 may communicate with a server 200. Here, the security module 110 may generate a pair of keys through one of a plurality of selection circuits verified using a physically unclonable function (PUF). Also, the electronic device 100 may establish a security channel and perform communication with the server 200 using the pair of keys generated by the security module 110. This will be described in detail below.

As a computation device for processing general operations performed by the electronic device 100, the processor 120 controls overall operations of each element of the electronic device 100. The processor 120 may include at least one of a central processing unit (CPU), a microprocessor unit (MPU), a microcontroller unit (MCU), a graphics processing unit (GPU), a neural processing unit (NPU), a digital signal processor (DSP), and any form of processor well known in the technical field of the present invention.

In addition, the processor 120 may execute computation for at least one application or program for performing methods or operations according to various embodiments of the present invention. The electronic device 100 may include one or more processors.

In other words, the processor 120 may be configured to process instructions of computer programs by performing basic arithmetic, logic, and input/output computations. The instructions may be provided to the processor 120 by the storage 130 or a communication interface. For example, the processor 120 may be configured to execute instructions received in accordance with a program code stored in a recording device such as the storage 130.

The storage 130 stores any one of various data, instructions, and information used by components (e.g., the processor) included in the electronic device 100 or a combination of two or more thereof. The storage 130 may include a volatile memory and/or a non-volatile memory. In the storage 130, an operating system (OS) and at least one program code may be stored. These software components may be loaded from a computer-readable recording medium, which is separated from the storage 130, to the storage 130. This computer-readable recording medium may include a floppy drive, a disk, tape, a digital versatile disc (DVD)/compact disc (CD) read-only memory (ROM) drive, a memory card, or the like. According to another embodiment, the software components may be loaded onto the storage 130 through the communication interface other than the computer-readable recording medium. For example, the software components may be loaded onto the storage 130 of the computing device 100 on the basis of a computer program that is installed using files received via a network.

The communicator 140 may provide a function for the electronic device 100 to communicate with another device (e.g., the server 200) via the network. For example, a request, an instruction, data, a file, etc., generated by the processor 120 of the electronic device 100 in accordance with a program code stored in a recording device, such as the storage 130, may be transmitted to other devices via the network under the control of the communicator 140. On the other hand, a signal, an instruction, data, a file, etc., from another device may be received by the electronic device 100 through the communicator 140 of the electronic device 100 over the network.

Specifically, the security module 110 may be placed in the electronic device 100 or a subscriber identification module in the electronic device 100. In other words, the electronic device 100 may include the subscriber identification module. The subscriber identification module may include subscriber identification information (an international mobile subscriber identity (IMSI) or a subscription concealed identifier (SUCI)) and a subscriber key Ki. In particular, the subscriber identification module according to the present embodiment may include a security chip based on a root of trust (RoT) to which a PUF is applied, to implement a subscriber identity module (SIM) structure for protecting key generation, storage, and utilization using hardware. This completely prevents external cloning and provides a more secure environment than existing universal subscriber identity modules (USIMs).

The subscriber identification module may include a USIM, an embedded subscriber identity module (eSIM), or an embedded universal integrated circuit card (eUICC). The subscriber identification module may include a security chip with a security function and may additionally include a processor, a storage, a communicator, etc., therein.

The security module 110 may generate a pair of keys to establish a security channel between the electronic device 100 and the server 200. Here, the pair of keys may be determined on the basis of the PUF of the security module 110. The PUF may provide an unpredictable digital value that is determined on the basis of process variation in the manufacturing process. Details of the PUF will be described below.

An authentication key generated by the security module 110 is a key (e.g., a private key, etc.) based on asymmetric key encryption or the like. When there is a previously registered authentication key, the previously registered authentication key may be removed, and the generated authentication key may be used as a new or updated authentication key to establish a communication channel. This will be described in detail below.

In addition, according to the exemplary embodiment, the security module 110 may store the authentication key in an internal memory and update the authentication key, thereby providing a high-level of security.

The security module 110 according to the exemplary embodiment may include a security processor 111, a PUF 112, a memory 113, and a communication module 114.

The security processor 111 is a device that controls operations performed by the security module 110, and may include, for example, a CPU, an MCU, or the like. The security processor 111 may extract an extraction circuit including at least one of a plurality of PUF-based circuits, generate a unique identity (UID) from a seed using the extraction circuit, and generate an authentication key (or a pair of keys (a private key and a public key)) using the generated UID. For example, the generated private key may be safely stored in a PUF-based secure storage, and the public key may be used for registration with a certificate authority (CA) or server authentication. The private key is utilized for public-key-based encryption or digital signature (public key infrastructure (PKI) operations) and can provide a high level of key protection because the computation is only performed in the security processor 111 without exposure. The private key may correspond to PUFₚᵣᵢᵥₐₜₑ which will be described below. The public key may correspond to PUF_{public} which will be described below. In addition, the security processor 111 may process operations described in a security method which will be described below.

The PUF 112 may provide an unpredictable digital value. Even when individual PUFs are manufactured through manufacturing processes that are accurate and the same, digital values provided by the individual PUFs may differ due to process variation. Therefore, the PUF 112 may also be referred to as a physical one-way function (POWF) that is practically impossible to duplicate. The PUF 112 may be used to generate an authentication key for security, communication, and/or device authentication. For example, the PUF 112 may be used to provide a unique key for distinguishing devices from one another or communicating between devices or between a device and a server. The PUF 112 and a method of implementing the PUF 112 are disclosed in Korean Patent No. 10-1139630, which is incorporated herein by reference in its entirety.

The memory 113 may store data required for authentication operations. For example, the memory 113 may store the authentication key and UID generated in accordance with the above description. Also, the memory 113 may store an authentication key corresponding to the ID "PUF." In addition, the memory 113 may generate a pair of keys using the authentication key and an asymmetric encryption scheme. In other words, according to the exemplary embodiment, the security processor 111 may store the authentication key or an encryption key from the pair of keys generated by the security processor 111 in an encrypted memory using the ID "PUF."

The communication module 114 may perform communication between the security module 110 and the outside. The communication module 114 may perform various communication operations such as short-distance communication, long-distance communication, wired communication, wireless communication, and the like.

Further, the communication module 114 may safely transmit a symmetric key generated by a random number generator (e.g., a true random number generator (TRNG)) of the security module 110 which will be described below, to the server 200 or the like using asymmetric key cryptography (e.g., a public key scheme). Also, a symmetric key transmitted by the communication module 114 or the like may be used as a session key to perform communication (e.g., transport layer security (TLS) communication/datagram transport layer security (DTLS) communication). For example, the security module 110 may use advanced encryption standard (AES), Rivest-Shamir-Adleman (RSA), secure hash algorithm (SHA), TRNG, etc., for communication or the like.

In addition, the security module 110 may include an accelerator (e.g., a crypto accelerator) having a security algorithm hardware acceleration function to improve security.

The security module 110 according to the exemplary embodiment may perform a physical encryption/decryption algorithm and protocol processing through the PUF 112. Further, the security module 110 may output or transmit an authentication key provided by at least a part of the PUF 112 to the server 200 or the like.

Like this, the electronic device 100 (or a security module) may include a hardware-wired (hardware-based) security module that performs encryption and decryption using a private key and a PUF for providing authentication information (a private key) including a unique private key, to perform secure communication with the server 200.

There are several embodiments of implementing a PUF according to the present invention. For example, a PUF may be implemented using process variation in a semiconductor manufacturing process as described above. Specifically, a PUF according to an exemplary embodiment may be implemented by vias or inter-layer contacts disposed between conductive layers.

Also, a PUF may be implemented in a portion of semiconductors. Therefore, when a semiconductor is observed from the outside, it may be difficult to determine the accurate position of a PUF. In other words, since there are innumerable vias or inter-layer contacts in a semiconductor circuit, it is difficult to determine which portion is used as a PUF, which is a favorable security effect.

Further, according to the exemplary embodiment, a plurality of PUFs rather than one PUF providing an authentication key may be provided.

Moreover, according to the exemplary embodiment, there may be a plurality of circuits between PUF vias formed in a module or chip. For example, a PUF may be implemented using active elements and passive elements. The active elements may provide the same value irrespective of a change in temperature, voltage, current, etc., to meet the necessary requirement of constancy, and utilize an error correction code and data (helper data) for correcting a changed value to check whether the value has changed and correct an error.

According to the exemplary embodiment, the security module may output a PUF-based output and a UID or authentication key corresponding to the output using passive elements. In other words, a plurality of circuits which will be described below may be formed of passive elements. For example, when there are 5,000 single elements in the security module, extraction circuits selected or extracted therefrom may be formed by selecting (or extracting) about 3,000 elements (e.g., passive elements). Also, it is possible to output a random value of, for example, 3,000 bits in accordance with about 3,000 elements. Accordingly, in the security module according to the exemplary embodiment, there may be multiple or a plurality of selectable or extractable circuits as in the security method which will be described below, and a unique and random ID may be generated through an extracted or selected one of the plurality of circuits. In this way, the security module and security method according to exemplary embodiments can strengthen security using a variable ID.

Like this, the security module and security method according to exemplary embodiments can change a UID which is an identifier by the chip itself or change a UID on the basis of a PUF of the security module (or chip) on a request from a security system (e.g., a request from a server, etc.). Further, by forming a plurality of or multiple verified circuits composed of a plurality of PUF-based elements for post-postprocessing, it is possible to easily generate different IDs while maintaining uniqueness even when a circuit (an extraction circuit or selection circuit) other than a previous circuit is used. Here, extractable or selectable circuits among the plurality of circuits may be verified in advance to have randomness and uniqueness, and the verified circuits may be designed or algorithmized to be extraction circuits or selection circuits.

Further, the security module and security method according to exemplary embodiments may use a PUF as a root key (or seed key) used for encrypting another value. This enables high-level secure authentication while providing safety in that a PUF itself remains secure against physical attacks.

As an example, the security module 110 or the electronic device 100 may use an ID (e.g., a hash value) of a PUF to generate a pair of public key infrastructure (PKI) keys and register a public key. The security module 110 or the electronic device 100 may generate a pair of keys (e.g., a pair of a public key and a private key) by combining an ID (e.g., a hash value) of a PUF with a generated random number (or a random number value). The random number (or the random number value) may be generated by a random number generator (e.g., a TRNG) or the like.

In addition, the security module 110 may use an encryption algorithm (an asymmetric encryption scheme or an asymmetric encryption algorithm), such as elliptic curve cryptography (ECC), etc., as various cryptographic signature verification engines. Also, the cryptographic signature verification engines may perform an encryption operation and/or a signature verification operation and signature using various cryptographic techniques such as homomorphic encryption (HE), post-quantum cryptography (PQC), functional encryption (FE), and the like.

For example, the security module 110 may generate a pair of keys by applying a digital value generated on the basis of the PUF 112 to an encryption algorithm which is an asymmetric encryption scheme.

The server 200 may communicate with a plurality of electronic devices 100. Also, the server may transmit data that is encrypted on the basis of an authentication key received from each electronic device to the electronic device. For example, the electronic device 100 (or a security module) may establish an encryption or security channel with the server 200 on the basis of an authentication key or a pair of keys generated by the PUF 112.

The server 200 is a network-side component that performs a subscriber authentication procedure and may include a home subscriber server (HSS), unified data management (UDM), an authentication server function (AUSF), a security anchor function (SEAF), and an authentication credential repository and processing function (ARPF).

Referring to FIGS. 3 to 6, an authentication method according to an exemplary embodiment may include an operation S310 of transmitting identification information or subscriber identification information (an IMSI or SUCI) to a server, an operation S320 of receiving authentication data including a challenge RAND and an authentication token AUTN from the server, an operation S330 of generating response information RES using the received authentication data (a subscriber key Ki stored in a subscriber identification module and a challenge), an operation S340 of signing the generated response information using security key information (a private key) generated using an asymmetric key to generate a signature, an operation S350 of transmitting the signature to the server, and an operation S360 of determining whether to initiate a communication session depending on an authentication result received from the server. Additionally, the authentication method may further include an operation S370 of transmitting a public key to the server. Here, the operation S370 of transmitting the public key to the server may be performed before the operation S310 of transmitting the subscriber identification information (the IMSI or SUCI) to the server, or the information may be transmitted together with the subscriber identification information while the subscriber identification information (the IMSI or SUCI) is transmitted to the server. The public key may be transmitted to the server 200 together with the subscriber identification information. With this configuration, it is possible to build a safer authentication environment through mutual authentication with a server and safe key exchange.

Specifically, the electronic device 100 may transmit subscriber identification information to the server 200 (S310). For example, the subscriber identification information may include an IMSI or SUCI.

As an example, the SUCI may be a value generated by encrypting the IMSI using a public key of a mobile communication service provider. The electronic device 100 may transmit the subscriber identification information to the server 200 at the time of subscription or the time of attempting to access the network.

The server 200 may search for a subscriber key Ki of a corresponding subscriber using the received subscriber identification information and generate a challenge RAND, an authentication token AUTN, and expected response information XRES (S320).

For example, the server 200 may store and manage subscriber identification information and authentication-related key data in an encrypted form. As an example, key-based AES encryption or an asynchronous key system may be used to strengthen security against information leakage from a database.

RAND is a random challenge, which may be a random number generated by the server 200. This may be generated independently of the subscriber key Ki. Accordingly, the challenge RAND may be a randomly generated random number. The subscriber key Ki may be stored in the subscriber identification module. The subscriber key Ki may be stored in advance before the subscriber identification information (the IMSI or SUCI) is transmitted to the server 200. In other words, the subscriber key Ki may be preloaded on a terminal at a factory or downloaded to a SIM or eSIM in an over-the-air (OTA) manner when the terminal is connected to a network.

According to the exemplary embodiment, the server 200 may generate an authentication vector (AV). The AV is a dataset generated by the server 200 to perform an authentication procedure for the terminal and may include a random value or the challenge RAND, the authentication token AUTN, the expected response information XRES, and in some cases, an encryption key (CK) and an integrity key (IK). This AV may provide fundamental data for an electronic device (or the terminal) to perform an authentication computation, and the server 200 may perform authentication and session key generation using the AV.

The server 200 may generate the challenge RAND and the authentication token AUTN. Also, the server 200 may generate the subscriber key Ki and the challenge RAND. For example, the expected response information XRES may be calculated using an f2 function based on an algorithm that uses Ki and RAND as input values, for example, MILENAGE. The expected response information XRES may correspond to response information RES.

In addition, the authentication token may include fields of integrity verification information (a message authentication code (MAC)), a sequence number (SQN), a network identifier (an authentication management field (AMF)), and the like.

The server 200 may transmit the generated challenge RAND and authentication token AUTN to the electronic device 100.

Then, the electronic device 100 may receive the challenge RAND and authentication token AUTN. For example, the challenge RAND may be a random number with a length of certain bits (e.g., 128 bits). Also, the authentication token AUTN may have a structure of certain bits (e.g., 128 bits) or more. The authentication token AUTN may include a parameter required for key derivation therein.

Then, the electronic device 100 may generate response information RES using the subscriber key Ki stored in the subscriber identification module and the received challenge (S330).

For example, the response information RES may be generated by applying the f2 function of the MILENAGE algorithm or an f5 function, an f1* function, etc., defined in 5G-authentication and key agreement (AKA). The generated response information RES may be used for authentication key derivation. Here, computation for generating the response information may be performed in a security environment, and the subscriber key Ki may not be exposed outside. Also, in this operation, while the response information RES is generated, integrity verification response information (a message authentication code for authentication (MAC-A)) may be calculated to verify the validity of the authentication token AUTN.

Then, the electronic device 100 may sign the generated response information RES using a private key (PUFₚᵣᵢᵥₐₜₑ) which is security key information generated in accordance with an asymmetric encryption scheme and generate a signature (S340).

For example, one of an elliptic curve digital signature algorithm (ECDSA), an RSA signature algorithm, and a post-quantum signature algorithm may be used for the signature. Various other signature algorithms may also be applied.

The private key (PUFₚᵣᵢᵥₐₜₑ) may be generated on the basis of a digital value based on a PUF included in the electronic device 100. As described above, a private key seed value may be generated by applying a key derivation function (KDF) to the private key (PUFₚᵣᵢᵥₐₜₑ) on the basis of a PUF output, and then a pair of ECC keys may be derived. For example, the signature may be generated by signing a hash value of the response information with the private key.

Then, the electronic device 100 may transmit the generated signature to the server 200 (S350). The server 200 may verify the validity of the received signature on the basis of the public key.

For example, as shown in FIG. 6, a public key PUF_{public} may be verified using a certificate issued by a CA. As an example, the electronic device 100 may transmit the public key PUF_{public} of the pair of a private key and the public key PUF_{public} generated by the CA in advance.

The electronic device 100 may transmit the public key PUF_{public} to the CA before the signature verification. For example, the electronic device 100 may generate a certificate signing request (CSR) including the public key PUF_{public} and transmit the CSR to the CA.

The CA may generate a certificate for the public key PUF_{public} and provide the certificate to the server 200. Here, before the public key PUF_{public} is transmitted to the server 200, the server 200 may request transmission of the public key PUF_{public} from the CA. Further, the operation of providing the public key PUF_{public} to the server 200 may be performed between the operation of transmitting the public key PUF_{public} to the CA in advance and the operation of generating and transmitting the CSR to the CA. For example, before the server 200 verifies the response information RES, the public key PUF_{public} may be transmitted to the server 200.

Before or during the authentication operation, the electronic device 100 may transmit the public key PUF_{public} to the server 200. For example, before transmitting the subscriber identification information (the IMSI or SUCI) to the server 200, the electronic device 100 may include the public key PUF_{public} in an authentication request message and transmit the authentication request message (S370). Alternatively, at the time of transmitting the subscriber identification information, the electronic device 100 may attach the public key to the SUCI and transmit the SUCI. The public key may be transmitted in a privacy-enhanced mail (PEM) format or a certificate (X.509 format). Also, when the same public key has been registered already during a public key registration process, the server 200 may apply a policy for blocking the same public key or rejecting additional registration, effectively preventing an attempt to register a clone SIM using the same authentication key.

Specifically, as shown in FIG. 5, the public key PUF_{public} may be directly received from the electronic device 100. As described above, the public key PUF_{public} may be an ECC key, and a method of executing an ECDSA verification algorithm using a message hash value and a signature as inputs may be applied as a verification method.

Upon receiving the subscriber identification information from the electronic device 100, the server 200 may receive the public key PUF_{public} together with the subscriber identification information. Also, when the response information RES is signed with the private key as described above, the signature may be verified using the public key PUF_{public}. A signature scheme may include ECDSA, Edwards-curve digital signature algorithm (EdDSA), PQC, and the like.

As shown in FIG. 4, the public key PUF_{public} may be directly received from the electronic device 100. As described above, the public key PUF_{public} may be an ECC key, and a method of executing an ECDSA verification algorithm using a message hash value and a signature as inputs may be applied as a verification method. However, unlike in FIG. 5, the server 200 may receive the public key PUF_{public} from the electronic device 100 before receiving subscriber identification information from the electronic device 100. Subsequent operations may be performed in the same way as described herein.

The server 200 may compare the verified response information RES with the expected response information XRES generated on its own to determine whether to authenticate the terminal (S360). Accordingly, the server 200 may transmit an authentication result which is about whether to authenticate the terminal, determined on the basis of the comparison to the electronic device 100. In other words, the authentication result may be obtained by verifying the signature using the public key and comparing the verified signature with the expected response information.

According to the exemplary embodiment, when the response information RES has the same value as the expected response information XRES, the server 200 may determine that the terminal (electronic device) is a valid user. On the other hand, when the response information RES and the expected response information XRES have different values, the server 200 may perform an authentication failure processing routine.

Further, when an authentication result is generated by the server 200, the electronic device 100 may receive the authentication result including whether the authentication has been successful from the server 200. Here, when the authentication result is authentication success, the electronic device 100 may initiate a communication session for network connection. For example, after the authentication, a session key (e.g., a security anchor function key (K_SEAF)) may be derived and used for integrity protection and encryption for communication (e.g., wireless) channel security.

In addition, this authentication method may be implemented on a terminal or an electronic device. The method according to the present invention may be coded as programs executable on the computer and also be implemented as various recording media such as magnetic storage media, optical media, digital storage media, and the like. In other words, the method according to the disclosed embodiment may be implemented in the form of program instructions that can be executed by various computing devices, and recorded on a computer-readable medium. An exemplary embodiment of the present disclosure may be a computer-readable recording medium on which one or more programs including instructions for performing the security method are recorded.

Various techniques described herein may be implemented in digital electronic circuitry, or in computer hardware, firmware, software, or combinations thereof. Implementations may be in the form of a computer program tangibly embodied in a computer program product, that is, an information carrier, for example, a machine-readable storage device (computer-readable recording medium) or a propagated signal, for processing by or controlling operations of a data processing device, for example, a programmable processor, a computer, or multiple computers. A computer program, such as the above-described computer program(s), may be written in any form of programming language including compiled or interpreted languages and may be deployed as a stand-alone program or in any form including modules, components, subroutines, or other units suitable for use in a computing environment. The computer program may be deployed to run on a single computer or multiple computers at one site or distributed across multiple sites and interconnected by a communication network.

The computer-readable recording medium may include program instructions, data files, data structures, etc., solely or in combination. The program instructions recorded on the computer-readable recording medium may be specially designed for exemplary embodiments of the present invention or well known and available to those of ordinary skill in the field of computer software. Processors suitable for processing computer programs include, for example, both general purpose and special purpose microprocessors and also one or more processors of any kind of digital computer. Generally, a processor will receive instructions and data from a ROM or a random access memory (RAM) or both. Elements of a computer may include at least one processor that executes instructions and one or more memory devices that store instructions and data. Generally, a computer may include, or be operatively coupled to receive data from or transfer data to, or both, one or more mass storage devices for storing data, for example, magnetic disks, magneto-optical disks, or optical discs. Information carriers suitable for embodying computer program instructions and data include, for example, magnetic media such as a hard disk, a floppy disk, and magnetic tape, optical media such as a compact disc (CD)-ROM and a digital video disc (DVD), magneto-optical media such as a floptical disk, semiconductor memory devices such as a ROM, a RAM, a flash memory, an erasable programmable ROM (EPROM), an electrically erasable programmable ROM (EEPROM), and the like. The processor and the memory may be supplemented by, or incorporated in, special purpose logic circuitry.

In addition, the computer-readable recording medium may be any available medium that is accessed by a computer, and may include both a computer storage medium and a transmission medium.

Here, a machine-readable storage medium may be provided in the form of a non-transitory storage medium. The term "non-transitory" may mean a tangible device without including a signal (e.g., electromagnetic waves), and does not distinguish between storing data in a storage medium semi-permanently and temporarily. For example, a "non-transitory storage medium" may include a buffer that temporarily stores data.

The security method according to various embodiments disclosed in the present document may be included and provided in a computer program product. The computer program product may be a commercial product that may be traded between a seller and a buyer. The computer program product may be distributed in the form of a machine-readable storage medium (e.g., a CD-ROM) or distributed (downloaded or uploaded) directly between two user devices (e.g., smartphones) online through an application store (e.g., Play Store^{™}). In the case of online distribution, at least a part of the computer program product (e.g., a downloadable app) may be at least temporarily stored or arbitrarily created in a storage medium that is readable by a device such as a memory of a server of the manufacturer, a server of the application store, or a relay server.

Although exemplary embodiments have been described above in detail, the scope of the present invention is not limited thereto but also includes various modifications and improvements made by those of ordinary skill in the art utilizing the basic concept of the present invention which is defined in the following claims.

The term "unit" used in this embodiment means a software or hardware component, such as a field programmable gate array (FPGA) or an application specific integrated circuit (ASIC), and a unit performs certain roles. However, the term "unit" is not limited to software or hardware. A unit may be configured to reside in an addressable storage medium or reproduce one or more processors. Therefore, as examples, the term "unit" includes components, such as software components, object-oriented components, object-oriented software components, class components, and task components, processes, functions, attributes, procedures, subroutines, segments of program code, drivers, firmware, microcode, circuits, data, databases, data structures, tables, arrays, and variables. Functions provided in components and units may be combined into a smaller number of components and units or may be subdivided into additional components and units. Further, components and units may be implemented to reproduce one or more CPUs in a device or secure multimedia card.

According to exemplary embodiments of the present invention, an authentication method and electronic device can be implemented to improve resistance to clone SIM creation and authentication bypass attacks caused by leakage of authentication information from a server or terminal and ensure the security integrity of an authentication procedure by transmitting subscriber identification information (an IMSI or a SUCI) to a server, generating a signature for response information (RES) using a subscriber key (Ki) in a subscriber identification module and an asymmetric key-based private key on the basis of a challenge (RAND) and an authentication token (AUTN) received from the server, and then transmitting the signature to the server to perform signature verification and response information comparison.

In addition, according to an embodiment of the present invention, an authentication method and electronic device can be implemented to strengthen the unique identification of a terminal and the reliability of an authentication path by providing a key-based authentication structure that is configured to generate a unique private key on the basis of a PUF and pass a server-side public key verification procedure using a signature that is generated on the basis of the unique private key and thus is fundamentally impossible to duplicate or reuse.

In addition, according to an embodiment of the present invention, an authentication method and electronic device can be implemented to realize an enhanced defense structure against cyber threats, such as malicious code insertion, key extraction, replay attacks, etc., and facilitate maintaining the confidentiality and integrity of authentication information by configuring an authentication key to be externally unexposed with all response information generation and signature processing performed within a closed secure environment in a terminal.

In addition, according to an embodiment of the present invention, an authentication method and electronic device can be implemented to prevent an SMS or a secondary means of voice-based authentication from being intercepted by performing a PUF-based authentication process in parallel even when a server detects a difference in a terminal identifier (IMEI) due to a device change such that authentication is denied even when a cloned USIM is used on another terminal.

A variety of beneficial advantages and effects of the present invention are not limited to those described above and may be easily understood from the description of detailed embodiments of the present invention.

While the present invention has been described above with reference to exemplary embodiments, these are merely illustrative and do not limit the present invention, and those of ordinary skill in the field to which the present invention pertains will understand that various modifications and applications not illustrated herein are possible without departing from the fundamental features of the embodiments. For example, each component specified in the embodiments can be modified. Also, differences in these modifications and applications should be construed as falling within the scope of the present invention defined in the appended claims.

## Claims

1. A method of performing user authentication by an electronic device, the method comprising:
transmitting identification information to a server;
receiving authentication data from the server;
generating response information on the basis of the received authentication data;
generating a signature for the generated response information using security key information;
transmitting the signature to the server; and
determining whether to initiate a communication session depending on an authentication result received from the server.

2. The method of claim 1, wherein the authentication result is a verification result obtained by verifying the signature using a public key and comparing expected response information with the signature that is verified.

3. The method of claim 2, further comprising, before the transmitting of the identification information to the server, transmitting the public key to the server.

4. The method of claim 2, wherein the transmitting of the identification information to the server comprises transmitting the public key to the server together with the identification information.

5. The method of claim 2, wherein the server receives the public key from a certificate authority (CA).

6. The method of claim 2, wherein the expected response information corresponds to the response information.

7. The method of claim 2, wherein the server generates an authentication vector including a challenge, the response information, and the expected response information.

8. The method of claim 1, wherein the security key information is a private key generated by applying a digital value generated on the basis of a physically unclonable function (PUF) to an asymmetric encryption scheme.

9. The method of claim 1, wherein the authentication data includes a challenge (RAND) and an authentication token (AUTN),
the response information is generated using a subscriber key (Ki) stored in a subscriber identification module and the challenge, and
the subscriber key (Ki) stored in the subscriber identification module is stored in advance before the identification information is transmitted to the server.

10. The method of claim 8, wherein the signature is generated by signing a hash value of the response information with the private key.

11. An electronic device for performing user authentication in a mobile communication network, the electronic device comprising;
a security module;
a communication module;
a memory; and
a processor operatively connected to at least one of the communication module and the memory,
wherein the processor transmits identification information to a server, receives authentication data from the memory and the server, generates response information on the basis of the received authentication data, generates a signature for the generated response information using security key information generated by the security module, transmits the signature to the server, and determines whether to initiate a communication session depending on an authentication result received from the server.

12. The electronic device of claim 11, wherein the authentication result is a verification result obtained by verifying the signature using a public key and comparing expected response information with the signature that is verified.

13. The electronic device of claim 12, wherein, before transmitting the identification information to the server, the processor transmits the public key to the server.

14. The electronic device of claim 12, wherein, while the identification information is transmitted to the server, the public key is transmitted to the server together with the identification information.

15. The electronic device of claim 12, wherein the server receives the public key from a certificate authority (CA).
